# EUROPEAN PATENT APPLICATION

(11) **EP 3 566 889 A1**
(43) Date of publication of application: **13.11.2019**
(21) Application number: 19166243.6
(22) Date of filing: 29.03.2019
(51) Int. Cl.: B60H 1/00, B60H 1/32

(54) **CLIMATE CONTROL SYSTEM FOR INCREASED ELECTRIC VEHICLE RANGE**

(30) Priority: 07.05.2018 US 201862762496 P; 21.06.2018 US 201816014889
(71) Applicant: Atieva, Inc., Newark, CA 94560 (US)
(72) Inventor: MANIAM, Balaji, Fremont, CA 94555 (US); KASPRZYK, Adam, San Jose, CA 95125 (US)
(74) Representative: Ungerer, Olaf

(57) **Abstract**

A method of operating an electric vehicle (EV) thermal management system, the EV thermal management system comprising a refrigerant-based thermal control loop (121) coupled to a refrigerant-air heat exchanger (127), a coolant-based thermal control loop (101) coupled to a liquid-air heat exchanger (105), a heat pump (401) integral to the refrigerant-based thermal control loop (121) with a heat pump condenser (403) coupleable to the coolant-based thermal control loop (121), wherein the refrigerant-air heat exchanger (127) and the liquid-air heat exchanger (105) are located within a passenger cabin air intake pathway, the method utilizing the heat pump (401) to permit efficient air recirculation by the vehicle's HVAC system, thereby increasing driving range, especially in cold weather conditions.

## Description

### FIELD OF THE INVENTION

The present invention relates generally to an electric vehicle and, more particularly, to a method of operating a thermal management system that improves the efficacy and efficiency of an electric vehicle's heating system in order to increase vehicle driving range.

### BACKGROUND OF THE INVENTION

In response to the demands of consumers who are driven both by ever-escalating fuel prices and the dire consequences of global warming, the automobile industry is slowly starting to embrace the need for ultra-low emission, high efficiency cars. While some within the industry are attempting to achieve these goals by engineering more efficient internal combustion engines, others are incorporating hybrid or all-electric drive trains into their vehicle line-ups. To meet consumer expectations, however, the automobile industry must not only achieve a greener drive train, but must do so while maintaining reasonable levels of performance, range, reliability, safety and cost.

Electric vehicles, due to their reliance on rechargeable batteries, require a relatively sophisticated thermal management system to insure that the batteries remain within their desired operating temperature range. Furthermore, in addition to controlling battery temperature the thermal management system must also be capable of heating and cooling the passenger cabin while not unduly affecting the vehicle's overall operating efficiency.

A variety of approaches have been taken to try and meet these goals. For example, U.S. Patent No. 6,360,835 discloses a thermal management system for use with a fuel-cell-powered vehicle, the system utilizing both low and high temperature heat transfer circuits that share a common heat transfer medium, the dual circuits required to adequately cool the vehicle's exothermic components and heat the vehicle's endothermic components.

U.S. Patent No. 7,789,176 discloses a thermal management system that utilizes multiple cooling loops and a single heat exchanger. In an exemplary embodiment, one cooling loop is used to cool the energy storage system, a second cooling loop corresponds to the HVAC subsystem, and a third cooling loop corresponds to the drive motor cooling system. The use of a heater coupled to the first cooling loop is also disclosed, the heater providing a means for insuring that the batteries are warm enough during initial vehicle operation or when exposed to very low ambient temperatures.

U.S. Patent No. 8,336,319 discloses an EV dual mode thermal management system designed to optimize efficiency between two coolant loops, the first cooling loop in thermal communication with the vehicle's batteries and the second cooling loop in thermal communication with at least one drive train component such as an electric motor or an inverter. The disclosed system uses a dual mode valve system to configure the thermal management system between a first mode and a second mode of operation, where in the first mode the two cooling loops operate in parallel and in the second mode the two cooling loops operate in series.

Although the prior art discloses numerous techniques for maintaining the temperature of the battery pack and other vehicle subsystems, an improved thermal management system is needed that efficiently controls passenger cabin air temperature while extending vehicle range, especially under cold weather conditions. The present invention provides such a thermal management system and method of use.

### SUMMARY OF THE INVENTION

The present invention provides a method for using a heat pump refrigeration system to remove moisture from a vehicle's cabin air, thereby allowing the vehicle's HVAC system to recirculate passenger cabin air and thus reduce energy consumption. Reducing energy consumption leads to substantial improvements in an electric vehicle's driving range, especially under cold weather conditions. Another aspect of the invention allows thermal energy to be stored within an electric vehicle's battery pack, thermal energy that can then be extracted by the HVAC system's heat pump. In another aspect of the invention, the HVAC system's heat pump can be used to extract and use waste heat from the vehicle's powertrain and power electronics.

A further understanding of the nature and advantages of the present invention may be realized by reference to the remaining portions of the specification and the drawings.

### BRIEF DESCRIPTION OF THE DRAWINGS

It should be understood that the accompanying figures are only meant to illustrate, not limit, the scope of the invention and should not be considered to be to scale. Additionally, the same reference label on different figures should be understood to refer to the same component or a component of similar functionality.
Fig. 1 schematically illustrates a typical heating, ventilation, and air conditioning (HVAC) system designed for a vehicle utilizing a conventional internal combustion (IC) engine;
Fig. 2 illustrates the HVAC system of Fig. 1 along with vehicle air exhaust vents;
Fig. 3 illustrates the heat flow path during the heating cycle for a conventional HVAC system such as the HVAC system shown in Figs. 1 and 2;
Fig. 4 illustrates a HVAC system suitable for use with the invention, the HVAC system including a heat pump that can be used to provide both passenger cabin heating and cooling;
Fig. 5 illustrates a HVAC system suitable for use with the invention, the HVAC system including a heat pump, a battery pack chiller and an additional chiller used with the vehicle's powertrain and/or power electronics; and
Fig. 6 illustrates the methodology associated with using a HVAC system in accordance with the invention.

### DESCRIPTION OF THE SPECIFIC EMBODIMENTS

As used herein, the singular forms "a", "an" and "the" are intended to include the plural forms as well, unless the context clearly indicates otherwise. The terms "comprises", "comprising", "includes", and/or "including", as used herein, specify the presence of stated features, process steps, operations, elements, and/or components, but do not preclude the presence or addition of one or more other features, process steps, operations, elements, components, and/or groups thereof. As used herein, the term "and/or" and the symbol "/" are meant to include any and all combinations of one or more of the associated listed items. Additionally, while the terms first, second, etc. may be used herein to describe various steps, calculations, or components, these steps, calculations, or components should not be limited by these terms, rather these terms are only used to distinguish one step, calculation, or component from another. For example, a first calculation could be termed a second calculation, and, similarly, a first step could be termed a second step, and, similarly, a first component could be termed a second component, without departing from the scope of this disclosure.

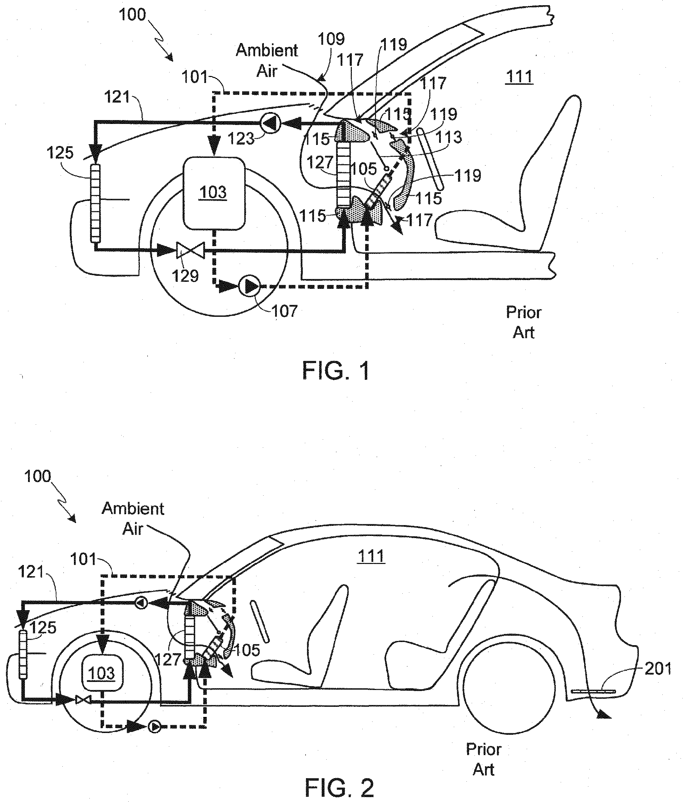

Fig. 1 schematically illustrates a typical heating, ventilation, and air conditioning (HVAC) system designed for a vehicle utilizing a conventional internal combustion (IC) engine. In HVAC system 100, a thermal control loop 101 containing a heat transfer fluid, e.g., a liquid coolant, is thermally coupled to IC engine 103. IC engine 103 heats the heat transfer fluid contained within thermal loop 101 which is then circulated through a liquid-air heat exchanger 105 using coolant pump 107. Heat exchanger 105 is positioned such that air entering the vehicle, for example along pathway 109, is heated as it passes through the heat exchanger and prior to entering cabin 111, thereby providing a simple means of providing heat to the passenger cabin. In this exemplary configuration, the amount of air passing through heat exchanger 105, rather than being diverted around heat exchanger 105, is controlled by an air flow controller 113, where air flow controller 113 may be comprised of one or more vanes, shutters, baffles, or other means. Typically the amount of air flowing through heat exchanger 105, or diverted around heat exchanger 105, is also controlled using one or more fans (not shown), for example fans located at the air intake, within an air conduit/channel, or otherwise positioned to control air flow. In the exemplary HVAC system shown in Fig. 1, multiple air control surfaces 115 (e.g., conduits, channels, dash board components, etc.) are used to form multiple air flow pathways 117, thus allowing air to be directed against the front windshield, directly at the passenger cabin occupants, towards the passengers' feet, or elsewhere. Louvers 119 (or other means) are typically used to control the amount of air passing through each air flow pathway 117.

Exemplary HVAC system 100 also includes a refrigerant-based thermal control loop 121. Control loop 121 includes a compressor 123 to compress the low temperature vapor contained within the loop into a high temperature vapor and a condenser 125 in which a portion of the captured heat is dissipated. After passing through condenser 125, the refrigerant changes phases from vapor to liquid, the liquid remaining at a temperature below the saturation temperature at the prevailing pressure. The refrigerant thermal loop is coupled to a refrigerant-air heat exchanger 127 via thermal expansion valve 129 which controls the flow rate of refrigerant into heat exchanger 127. Heat exchanger 127, also referred to herein as an evaporator, provides a means for cooling the air within passenger cabin 111. Additionally, in cold weather evaporator 127 and the same refrigeration system may be used to remove moisture from the incoming air before it is heated by heat exchanger 105, thus reducing window fogging. Both of these processes, i.e., cooling the passenger cabin and dehumidifying incoming air, remove heat from the HVAC supply air.

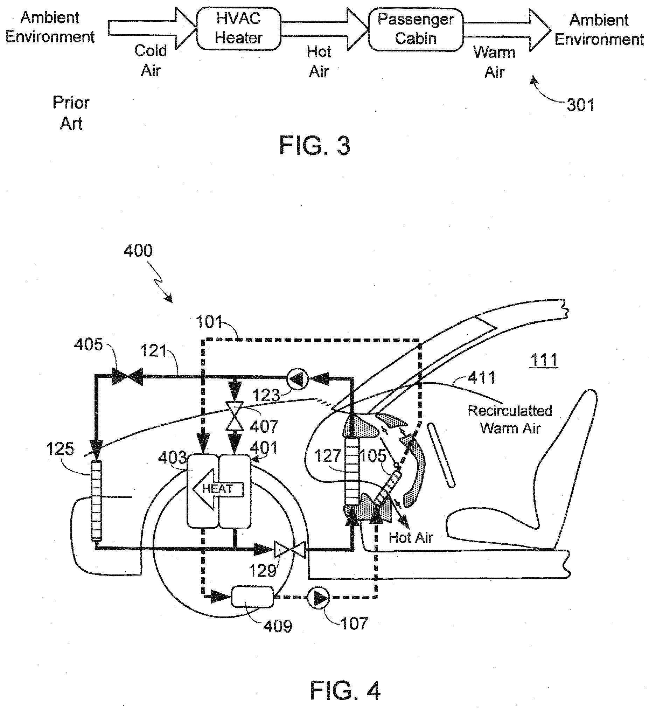

As noted above, during cold weather thermal control loop 101 and heat exchanger 105 are used to heat incoming air to a comfortable temperature, after which the heated air is forced into the passenger cabin via one or more of a plurality of air vents (e.g., air flow pathways 117). The warm air within passenger cabin 111 is exhausted through one or more exhaust vents (see, for example, exhaust vents 201 in Fig. 2). In the conventional HVAC system shown in Figs. 1 and 2, the heat contained within the exhaust air is not recirculated back to the passenger cabin. Fig. 3 illustrates the overall energy flow path used during cold weather of HVAC system 100.

While the recirculation of passenger cabin air is common when operating the system in the cooling mode, in a typical HVAC system operating in the heating mode the heated passenger cabin air is expelled back into the ambient environment rather than being recirculated (i.e., step 301 of the flow path shown in Fig. 3). This is because moisture accumulates in the warm passenger cabin air and if that moist air is recirculated, the moisture will condense on cold windows, resulting in window fogging and reduced visibility. Since the humidity level in fresh cold outside air is usually very low, continuously using fresh air during cabin heating reduces the chance and/or severity of window fogging.

The use of fresh air during cabin heating has very little impact on the mileage of a conventional vehicle equipped with an IC engine since the HVAC system in such a vehicle, as described above, utilizes waste heat. In marked contrast, the impact on vehicle range in an electric vehicle (EV) can be substantial since EVs use stored electrical energy from the battery for the heating process, electrical energy that would otherwise be available to operate the vehicle's electric motor. This effect is especially problematic in low range EVs where the reduction in driving range during cold weather may substantially affect the vehicle's usefulness. As described in detail below, the current invention alleviates this problem and facilitates the use of EVs in cold weather.

In accordance with the invention, the vehicle's HVAC system utilizes a heat pump 401. The heat pump system has the ability to provide both cooling and heating using the refrigeration system. Additionally, and in accordance with the invention, the heat pump system is used to (i) remove the moisture in the cabin air using evaporator 127, and (ii) recycle the thermal energy removed from the evaporator through the heat pump condenser 403 and transfer it back to the recirculated cabin air. This process achieves two benefits; first, the system recirculates the thermal energy obtained from the moisture removal process back into the cabin instead of expelling it to the ambient environment, and two, the system recirculates the cabin air on very cold days while reducing the chances for window fogging. By recirculating warmed cabin air rather than expelling it to the outside environment, energy use for cabin heating can be substantially reduced, leading to an increase in EV driving range when ambient temperatures are low (e.g., winter).

Fig. 4 illustrates a HVAC system 400 suitable for use with the invention, system 400 utilizing a heat pump 401 that can be used to provide both passenger cabin heating and cooling. As shown, system 400 includes two condensers, the outside condenser 125 as in the previously illustrated HVAC system, and a heat pump condenser 403. When the HVAC system 400 is operating in the cooling mode, i.e., when the ambient temperatures are high, the refrigerant-based thermal control loop 121 operates as previously described, providing cool air to passenger cabin 111 via heat exchanger 127 (i.e., the cooling system's evaporator). When HVAC system 400 is operated in this mode, shut-off valve 405 is kept open while shut-off valve 407 is kept closed, thereby directing the refrigerant to outside condenser 125 and allowing the captured heat to be expelled to the ambient environment. During heat pump operation, shut-off valve 405 is closed and shut-off valve 407 is open, thereby allowing the high pressure, high temperature refrigerant within thermal loop 121 to flow through heat pump condenser 403. The heat pump condenser 403 can be a liquid cooled condenser as shown where the heat removed from the evaporator is transferred to the coolant flowing through the heat pump condenser. Additional heat can be added to the cabin heating loop 101 using a supplemental heater 409 disposed in the same coolant loop.

Warm humid air from the passenger cabin (see exemplary air path 411) is circulated through the HVAC system with the refrigeration loop running. The warm humid air first enters evaporator 127. The air entering evaporator 127 is cooled to a low temperature, preferably just above the triple point of water (i.e., 0.01 °C). By cooling the warm humid air, moisture is removed. Compressor 123 then pumps the thermal energy removed from evaporator 127, including the latent heat of moisture, through shut-off valve 407 and to the heat pump condenser. The thermal energy removed from the evaporator and the thermal energy equivalent of compressor power is then transferred to the coolant (or air) and this heat is eventually used to re-heat the recirculated air as it passes through liquid-air heat exchanger 105. If necessary, supplementary heater 409 can be used to provide additional heat via liquid-air heat exchanger 105. After passing through the heat pump, the refrigerant is expanded to a lower temperature (pressure) using expansion valve 129, thus allowing the cycle to continue.

It will be appreciated that the above-described system can be modified without departing from the invention. For example, an air side inner condenser could be used to directly heat air.

Note that the above-described HVAC system can also be used to reduce energy consumption during hot days when the HVAC system is operating in the cooling mode. Typically, especially in areas with high humidity levels, the humid air must first be cooled to a low temperature sufficient to remove moisture from the air (for example, cooled to the triple point of water, i.e., 0.01 °C). Then the air must be re-heated to the temperature requested by the vehicle's occupants. Utilizing the heat pump shown in Fig. 4, a portion of the thermal energy from evaporator 127 can be transferred back to coolant loop 121 using the heat pump condenser. This energy can then be used to reheat the dehumidified air to the desired temperature using liquid-air heat exchanger 105.

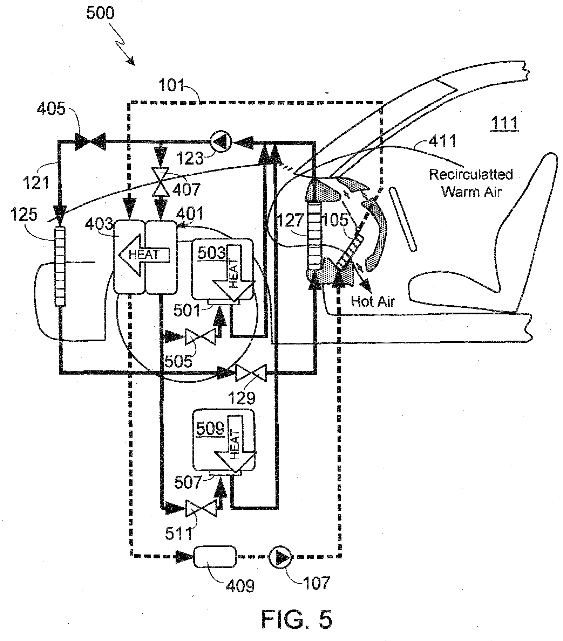

In the preferred embodiment of the invention, and as illustrated in Fig. 5, the vehicle is an EV and the HVAC system 500 includes a battery chiller 501 that can extract thermal energy from the battery pack 503. Additionally, in this configuration thermal energy can be stored within the vehicle's battery pack, for example by elevating the battery pack temperature by the desired amount (e.g., typically in the range of 5° to 30° C) when the vehicle is plugged into an external charging energy source.

Note that in addition to increasing driving range by recirculating warm passenger air during cold weather driving, the disclosed system can also be used to heat battery pack 503 to insure that the battery is operating in the preferred operating temperature range. Battery pack 503 can be heated using heater 409 and combining the battery and passenger cabin coolant loops. Alternately, the battery pack can utilize an independent battery heater, thus allowing the battery and passenger cabin coolant loops to remain separate. The battery pack can also be heated by other means such as through the process of charging or discharging.

During normal driving, the energy stored in battery pack 503 can be recovered from a thermally conditioned battery through the battery chiller 501 that is in thermal contact with the battery pack, either in direct thermal contact or through a battery pack coolant system.

As shown in Fig. 5, in this embodiment a second expansion valve 505 is used to expand the refrigerant through the battery chiller, thereby extracting the thermal energy stored within the battery pack. This thermal energy is transferred to the coolant or directly to the passenger cabin air via heat pump condenser 403. Alternately, the expansion can be done through the battery chiller and the evaporator simultaneously.

While the preferred embodiment of the heat pump system extracts thermal energy from the battery pack, it should be understood that this same approach can be used to extract thermal energy from the propulsion powertrain(s) and/or associated electronics, although the amount of waste heat generated by the powertrain/electronics is typically much less than that generated by the battery pack. The extraction of thermal energy from the powertrain and/or power electronics can be done in addition to, or in lieu of, extracting thermal energy from the battery pack. In the embodiment shown in Fig. 5, this potential source(s) of additional thermal energy is represented by chiller 507, which is in thermal contact with the powertrain and/or power electronics 509 and coupled to the heat pump system via expansion valve 511. Note that while separate chillers are shown, a single chiller can be used with both the battery pack and the powertrain/power electronics, assuming the single chiller is thermally coupled to both the battery pack and the powertrain/power electronics.

Through the use of a heat pump, and as noted above, cabin air can be recirculated through the HVAC system, thereby lowering the amount of energy required to maintain the desired cabin temperature. For a long range electric vehicle with a range of 250 to 300 miles and utilizing a conventional HVAC system, the inventors have found that making several 30 minute trips on extremely cold days can reduce the driving range by 15 to 30%, assuming that the passenger cabin is heated to a comfortable temperature range. Clearly the impact is much larger, up to 40%, for EVs with a relatively low driving range. By using air recirculation as described above, this range loss can be dramatically reduced.

In an EV, using the battery pack as a thermal energy storage as described above can further extend the range of the EV by 5 to 10% since less electric energy is consumed in heating the passenger cabin. Similarly, using powertrain waste heat recovery can further extend the range of the electric vehicle by 5 to 10%, as less electric energy is consumed in heating the passenger cabin. In general, the powertrain waste heat recovery approach is more beneficial during long drives.

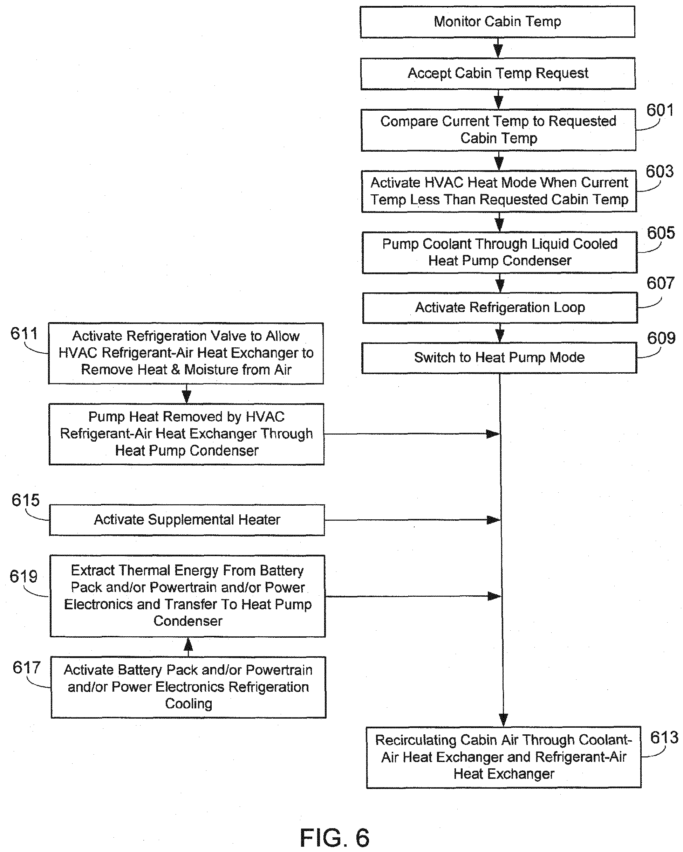

Fig. 6 illustrates the methodology associated with a HVAC system that includes a heat pump in accordance with the invention. In a typical scenario, determination of whether to operate the HVAC system in the cooling mode or the heating mode is the result of comparing the current passenger cabin air temperature with a requested cabin air temperature (step 601). The requested cabin air temperature is typically input by adjusting a thermostat, where the thermostat interface may be a touch screen, a dial, or other means. If the HVAC system determines that the current air temperature is less than that desired, the HVAC system activates the heat mode (step 603). Once the HVAC system's heat mode is activated, coolant is pumped through the heat pump condenser 403 (step 605), the refrigeration loop 121 is activated (step 607), and the system is switched to the heat pump mode (609). Additionally, valve 407 is opened (step 611) while the outside condenser 125 is decoupled from refrigerant-based thermal control loop 121, thereby allowing the high pressure, high temperature refrigerant within thermal loop 121 to flow through heat pump condenser 403. After the coolant pump (e.g., pump 107) is activated as well as the refrigeration loop, when warm cabin air is recirculated through the HVAC system (step 613), moisture is removed via refrigerant-air heat exchanger 127 and heated via liquid-air heat exchanger 105. If necessary and as noted above, additional heat can be added to the cabin heating loop 101 using supplemental heater 409 (step 615). Alternately, or in addition to the supplemental heater, refrigeration cooling of the battery pack and/or powertrain and/or power electronics can be initiated (step 617), thereby allowing thermal energy to be extracted from the battery pack and/or powertrain and/or power electronics and transferred to the heat pump condenser (step 619).

Systems and methods have been described in general terms as an aid to understanding details of the invention. In some instances, well-known structures, materials, and/or operations have not been specifically shown or described in detail to avoid obscuring aspects of the invention. In other instances, specific details have been given in order to provide a thorough understanding of the invention. One skilled in the relevant art will recognize that the invention may be embodied in other specific forms, for example to adapt to a particular system or apparatus or situation or material or component, without departing from the spirit or essential characteristics thereof. Therefore the disclosures and descriptions herein are intended to be illustrative, but not limiting, of the scope of the invention.

## Claims

1. A method of operating an electric vehicle (EV) thermal management system, the EV thermal management system comprising (i) a refrigerant-based thermal control loop coupled to a refrigerant-air heat exchanger and (ii) a coolant-based thermal control loop coupled to a liquid-air heat exchanger and (iii) a heat pump integral to the refrigerant-based thermal control loop and (iv) a heat pump condenser coupleable to the coolant-based thermal control loop, wherein the refrigerant-air heat exchanger and the liquid-air heat exchanger are located within a passenger cabin air intake pathway, the method comprising:
determining when passenger cabin heating is required, wherein when passenger cabin heating is required said method further comprises:
coupling said heat pump condenser to said coolant-based thermal control loop, said heat pump condenser heating a coolant within said coolant-based thermal control loop;
pumping said coolant through said liquid-air heat exchanger;
coupling said heat pump to said refrigerant-based thermal control loop;
activating said refrigerant-based thermal control loop; and
recirculating passenger cabin air through said liquid-air heat exchanger and through said refrigerant-air heat exchanger, wherein said liquid-air heat exchanger heats said passenger cabin air and said refrigerant-air heat exchanger removes moisture from said passenger cabin air.

2. The method of claim 1, said step of activating said refrigerant-based thermal control loop further comprising pumping thermal energy removed by said refrigerant-air heat exchanger through said heat pump condenser, wherein said heat pump condenser transfers said thermal energy to said coolant within said coolant-based thermal control loop, and wherein said pumping step is performed by a compressor.

3. The method of claim 1, further comprising activating a supplemental heater when passenger cabin heating is required, said supplemental heater coupled to said coolant-based thermal control loop and configured to heat said coolant flowing through said liquid-air heat exchanger when activated.

4. The method of claim 1, said determining step further comprising:
accepting a passenger request for a passenger cabin temperature;
monitoring a current passenger cabin temperature;
comparing said current passenger cabin temperature to said requested passenger cabin temperature; and
activating passenger cabin heating when said current passenger cabin temperature is less than said requested passenger cabin temperature.

5. The method of claim 1, further comprising decoupling an external condenser from said refrigerant-based thermal control loop when passenger cabin heating is required.

6. The method of claim 5, said step of decoupling said external condenser from said refrigerant-based thermal control loop further comprising closing a shut-off valve.

7. The method of any one of claims 1-6, wherein when passenger cabin heating is required said method further comprises:
extracting thermal energy from an EV battery pack; and
transferring said thermal energy to said heat pump via said refrigerant-based thermal control loop.

8. The method of any one of claims 1-6, wherein when passenger cabin heating is required said method further comprises:
extracting thermal energy from an EV powertrain; and
transferring said thermal energy to said heat pump via said refrigerant-based thermal control loop.

9. The method of any one of claims 1-6, wherein when passenger cabin heating is required said method further comprises:
extracting thermal energy from an EV power electronics; and
transferring said thermal energy to said heat pump via said refrigerant-based thermal control loop.
